(19) Europäisches Patentamt

European Patent Office

Office européen des brevets

(11) EP 1 708 010 A1

(12) EUROPEAN PATENT APPLICATION

(43) Date of publication:
04.10.2006 Bulletin 2006/40

(51) Int Cl.:
$G02B\ 27/22^{(2006.01)}$    $H04N\ 13/00^{(2006.01)}$

(21) Application number: 05255928.3

(22) Date of filing: 23.09.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 28.03.2005 JP 2005092099

(71) Applicant: KABUSHIKI KAISHA TOSHIBA
Minato-ku,
Tokyo 105-8001 (JP)

(72) Inventors:
• Fukushima, Rieko
I.P.D. Toshiba Corporation
Tokyo 105-8001 (JP)
• Hirayama, Yuzo
I.P.D. Toshiba Corporation
Tokyo (JP)

(74) Representative: Granleese, Rhian Jane
Marks & Clerk
90 Long Acre
London WC2E 9RA (GB)

(54) **Image display apparatus**

(57)    The present invention can provide an image display apparatus which where viewing zones can be provided on at least two regions spaced from each other. The image display apparatus is provided with a two-dimensional image display apparatus where a plurality of pixels are arranged in a two-dimensional manner and an optical plate which has a plurality of exit pupils and changes regions where image information pieces displayed on the pixels are viewed for the respective pixels by controlling light ray directions from the pixels, where a pixel group for elemental image being a plurality of pixels corresponds to one exit pupil of the exit pupils, image information corresponding to a position where each pixel is viewed via the exit pupil is displayed is displayed on each pixel for elemental image displaying, and the pixel group for elemental image displaying is provided so as to be separated to two or more regions.

FIG. 1B

**Description**

BACKGROUND OF THE INVENTION

Field of the Invention

The present invention relates to an image display apparatus for displaying a two-dimensional image or a three-dimensional image, which has two or more viewing zones spaced from one another.

Related Art

In a commonly used two-dimensional image display apparatus, one or the same image can be viewed in any direction. However, in such a case that two viewers or persons opposed to each other via a two-dimensional image display apparatus with a display plane placed horizontally, which is positioned therebetween, or two viewers (persons) seating on a driver's seat and a front passenger's seat positioned on both sides of a car navigation system are assumed, there is a demand for displaying different images to two persons whose observing positions are spaced from each other.

On the other hand, even in a conventional autostereoscopic three-dimensional image display system, such a design has been adopted that only one viewing zone is provided. In case of a three-dimensional image display apparatus of an autostereoscopic system, a three-dimensional image can be viewed without using glasses, but an observable range (a viewing zone) is limited. A viewing zone in the conventional autostereoscopic three-dimensional image display system has been designed based upon such an assumption that there is one viewer or a plurality of observers positioned on both sides of the one viewer. As described regarding the two-dimensional image display apparatus, however, in such a case that two viewers or persons opposed to each other via a two-dimensional image display apparatus with a display plane placed horizontally, which is positioned therebetween, or two viewers (persons) seating on a driver's seat and a front passenger's seat positioned on both sides of a car navigation system are assumed, there is a demand for displaying different images to two persons whose viewing positions are spaced from each other.

In order to satisfy such a demand, there has been proposed a method where such an exit pupil array as a lenticular sheet or a slit member and a highly fine flat display panel such as an LCD (a liquid crystal display apparatus) are combined to each other so that a two-dimensional image or a three-dimensional image which can be viewed or observed is distributed for each viewing position. Regarding this method, a constitution for providing a plurality of viewing zones for the three-dimensional image will be first described below. A case where a plurality of viewing zones for the two-dimensional image are provided can be understood according to the understanding about the case of the three-dimensional image.

A three-dimensional display apparatus where respective pixels on a two-dimensional image display apparatus are caused to correspond to regions where a pixel can be viewed one by one according to a constitution where an exit pupil array is combined to a front face or rear face of a two-dimensional display apparatus and a three-dimensional image is recognized by performing switching to an image corresponding to a viewing position is being broadly examined. Specifically, the following two systems are known.

1) Binocular system where two or more pixels (or two sub-pixels) are caused to correspond to one exit pupil in a horizontal direction and a stereoscopic image is recognized by displaying two kinds of images corresponding to a parallax between both eyes of a viewer on the two pixels.
2) Multiview system where n pixels (or n sub-pixels) are caused to correspond to one exit pupil and though motion parallax is discontinuous, it is given by displaying n kinds of images causing a parallax corresponding to an interpupillary distance.

In the binocular system or multiview system, a horizontal pitch of exit pupils is set to be slightly smaller than a pixel group caused to correspond to one exit pupil, namely, a pitch of pixel groups for elemental image displaying. Thereby, light rays which are emitted from respective pixels and whose emitting directions are defined unambiguously via exit pupils form two or n converging points of light rays on a plane spaced from a three-dimensional image display plane by a viewing distance L. A distance between the converging points of light rays corresponds to an interpupillary distance (generally, 65mm), and a perspective projection image acquired from each converging point is displayed on a pixel group observed from the converging point of light rays. Thereby, a viewer or a viewer positioning his/her eyes at this point can view a stereoscopic image.

Further, a similar constitution is used even in an integral imaging method examined by the inventors. However, light rays which are emitted from respective pixels and whose emitting directions are defined unambiguously via exit pupils are distributed evenly within a space where viewer is positioned. A special position such as a light converging point in the binocular system or the multiview system does not occur. Thereby, the viewer can recognize a stereoscopic image and simultaneously can obtain natural motion parallax (see JP-A-2004-212666, for example).

An optical plate where the exit pupils described above are provided cyclically indicates a pin hole member, a slit member, a lens array, or a lenticular sheet, and it serves to extract image information displayed on about one pixel from a pixel group for elemental image displaying to allow viewing thereof.

In the autostereoscopic three-dimensional image display methods, configuration is employed such that the viewing zone is one and a pixel group for elemental image displaying to one exit pupil constitutes one set. In the configuration, when the viewing zone is divided into two or more regions for the above-described application, such a method can be adopted that a pixel group for elemental image displaying are divided into two or more viewing zones or groups, and different three-dimensional images are viewable in respective divided viewing zones. When two or more kinds of two-dimensional images are displayed on different viewing zones, it is made possible to cause a viewer to view two or more kinds of two-dimensional images according to his/her viewing position by displaying constituent image information for individual two-dimensional images in respective ones of two or more divided pixel groups for elemental image displaying. In this case, a parallax is not given within respective ranges of the two or more divided pixel group for elemental image displaying along the above constitution. It is preferable that each range where a two-dimensional image can be viewed has a width of 65mm or more such that both eyes of each viewer enters in the range. When two viewers are further separated from each other, it is necessary to further expand two viewing zones (see JP-A-2000-275576, for example).

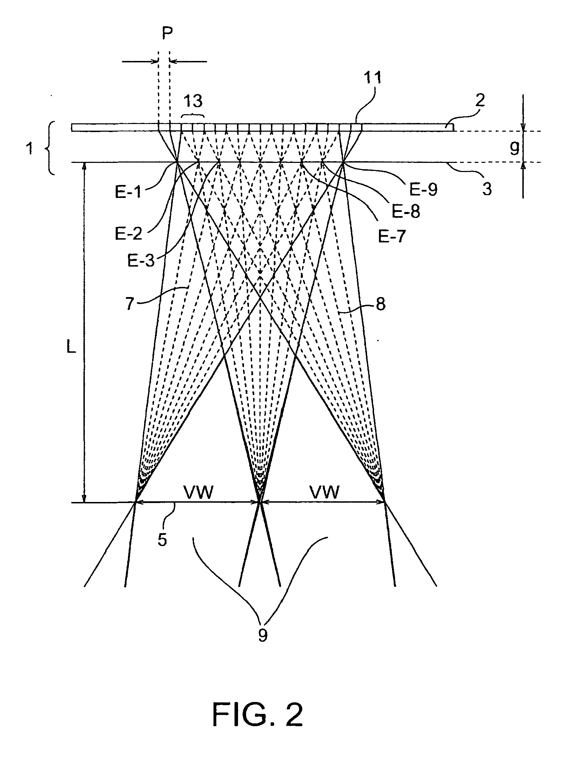

As shown in Fig. 2 which is a horizontal sectional view, however, in a three-dimensional image display apparatus 1 provided with a two-dimensional image display apparatus 2 constituted of, for example, a liquid crystal panel where a plurality of pixels 11 are arranged in a matrix manner and an optical plate 3 constituted of, for example, a slit member having a plurality of exit pupils E-1 to E-9, when a gap between an exit pupil and a pixel portion is represented as g, each viewing zone for a parallax image is represented as VW, each elemental image width is represented as P, a viewing distance (a distance from the optical plate 3 to a viewing distance plane 5) is represented as L in a constitution for allowing a viewer to view, for example, two kinds of three-dimensional images by combination with the optical plate 3, the following relationship (1) can be obtained.

$$VW = P \times L/g \qquad (1)$$

Therefore, it is necessary to reduce the gap g in order to expand the viewing zones VW for respective three-dimensional images. That is, when two viewing zones VW are expanded for providing a viewing zone 9 including two viewers separated in a horizontal direction within a viewing distance plane 5 while maintaining the number (proportional to the elemental image width P) of pixel groups for elemental image displaying 13 corresponding to each exit pupil, such a problem arises that a distance between the converging points of right rays becomes 65mm or more in the multiview system, or a distance between light rays carrying parallax image in the integral imaging system decreases, namely, a displayable range in a depth direction for a three-dimensional image becomes small. Further, a light ray group incident on a viewing position between two viewers spaced from each other within a viewing zone expanded for containing the two viewers does not contribute to a stereoscopic viewing of the viewers. That is, it can not be said that a resolution of the three-dimensional image display apparatus is utilized sufficiently. Incidentally, in Fig. 2, a region indicated by reference numeral 7 denotes a region filled with a light ray group emitted from the leftmost exit pupil, and a region indicated by reference numeral 8 denotes a region filled with a light ray group emitted from the rightmost exit pupil.

The configuration shown in Fig. 2 is also applicable to a binocular type three-dimensional image display apparatus. In this case, by configuring the pixel group for elemental image displaying 13 with two pixels or two sub-pixels so that two kinds of two-dimensional images applied with a parallax equivalent to a binocular parallax can be viewed in two viewing zones 9 designed to have a width of 65mm which is an interpupilliary distance, a stereoscopic view can be made possible. In this case, when the viewing distance L is made small or each viewing zone 9 is expanded to expand a viewing zone for each parallax image (for example, see JP-A-2000-275576), it is necessary to reduce the gap g in view of the relationship of the equation (1). A case that sufficient viewing zones are secured for two or more kinds of two-dimensional images respectively is also the same as the above.

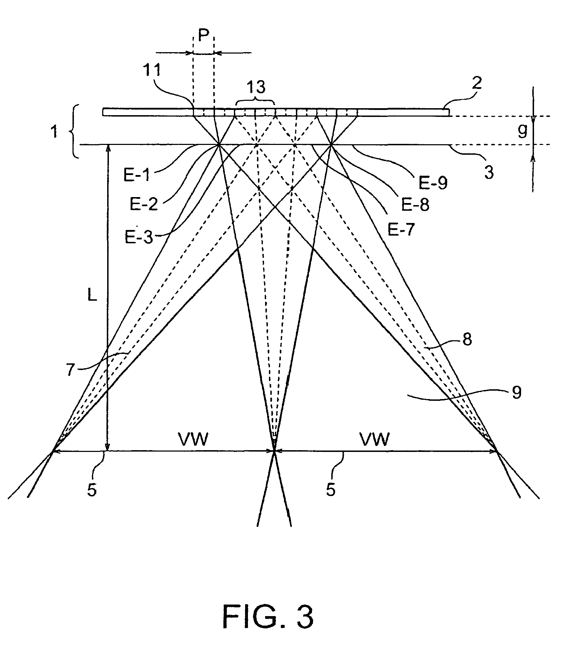

However, for example, when a liquid crystal display (LCD) is used as a two-dimensional image display apparatus, since a pixel portion of the liquid crystal display is formed by performing sandwiching with two sheets of glass substrates provided with a transparent pixel electrode, the gap g between the pixel portion and the exit pupil is required to include a size of the glass thickness, so that it is impossible to produce a gap g smaller than the glass thickness. As a measure to this problem, there is a method where an elemental image displaying range P is expanded in a pseudo manner. That is, by setting a pitch for arranging the same parallax image to a pitch of plural pixels (or plural sub-pixels) instead of a pitch $p_p$ of pixels (or sub-pixels (displaying red, green, blue, or the like)), the viewing zone VW can be made large while the gap g is being maintained. Fig. 3 shows an example that the viewing zone VW has been expanded two time by setting the pixel pitch P to two times the case shown in Fig. 2. However, when this method is selected, such a problem occurs that a formation pitch $p_e$ for the exit pupils E-1 to E-9 becomes two times the conventional one, so that a horizontal resolution on a two-dimensional image viewed from each viewing zone lowers to 1/2.

## SUMMARY OF THE INVENTION

The present invention has been made in view of these circumstances, and an object thereof is to provide an image display apparatus where all pixel information elements are utilized effectively while displaying individual two-dimensional images or three-dimensional images in viewing zones spaced from each other.

An display apparatus according to an aspect of the present invention includes:

a two-dimensional image display apparatus where a plurality of pixels are arranged in a two-dimensional manner; and an optical plate which has a plurality of exit pupils and makes different regions where image information pieces displayed on the pixels are viewed for the respective pixels by controlling light ray directions from the pixels, wherein a pixel group for elemental image displaying constituted of a plurality of pixels corresponds to one exit pupil of the exit pupils,

image information corresponding to a position where each pixel is viewed via the exit pupil is displayed is displayed on each pixel for elemental image displaying, and

the pixel group for elemental image displaying is provided so as to be separated to two or more regions.

## BRIEF DISCRIPTION OF THE DRAWINGS

Fig. 1A is a diagram showing pixel positions for elemental image displaying according to an embodiment of the present invention, and Fig. 1B is a diagram showing a three-dimensional image display method where a viewing zone is divided according to the embodiment of the invention;

Fig. 2 is a diagram showing a conventional method for dividing a viewing zone;

Fig. 3 is a diagram showing a conventional method for enlarging a viewing zone;

Fig. 4A is a diagram showing conventional pixel positions for elemental image displaying, and Fig. 4B is a diagram showing a conventional viewing zone;

Fig. 5 is a diagram showing an example where a plurality of viewing zones are included in a three-dimensional space image display apparatus according to an embodiment of the invention;

Fig. 6 is a diagram showing pixel positions for elemental image displaying in a conventional three-dimensional space image display apparatus;

Fig. 7 is a diagram showing pixel positions for elemental image displaying in a three-dimensional space image display apparatus according to an embodiment of the invention;

Fig. 8 is a diagram showing pixel positions for elemental image displaying in a three-dimensional space image display apparatus according to an embodiment of the invention;

Fig. 9 is a diagram showing pixel positions for elemental image displaying in a three-dimensional space image display apparatus according to an embodiment of the invention;

Fig. 10 is a diagram showing pixel positions for elemental image displaying in a conventional three-dimensional image display apparatus;

Fig. 11 is a diagram showing pixel positions for elemental image displaying in a three-dimensional image display apparatus according to an embodiment of the invention;

Figs. 12A to 12C are diagrams showing a pixel position for elemental image displaying in a three-dimensional image display apparatus according to an embodiment of the invention;

Figs. 13A and 13B are diagrams showing a viewing zone when pixel positions for elemental image displaying shown in Fig. 8 are adopted;

Figs. 14A and 14B are diagrams showing viewing zone for a three-dimensional image display apparatus in a car navigation system;

Fig. 15 is a diagram for explaining a merit obtained by adopting a constitution of the invention;

Fig. 16 is a diagram showing a structure for preventing a false image by using a light shield plate in a three-dimensional image display apparatus according to an embodiment of the present invention;

Fig. 17 is a diagram showing a structure for preventing a false image by using a micro-pole in a three-dimensional image display apparatus according to an embodiment of the present invention; and

Fig. 18 is a diagram for explaining an aspect where a viewing zone is divided in order to set regions corresponding to both eyes of a viewer in a three-dimensional image display apparatus to viewing zones according to an embodiment of the present invention.

DETAILED DESCRIPTION OF THE DRAWINGS

Embodiments of the present invention will be explained below with reference to the drawings. Incidentally, constituent elements having a similar or the same function are attached with the same or reference numerals, and explanation thereof is omitted.

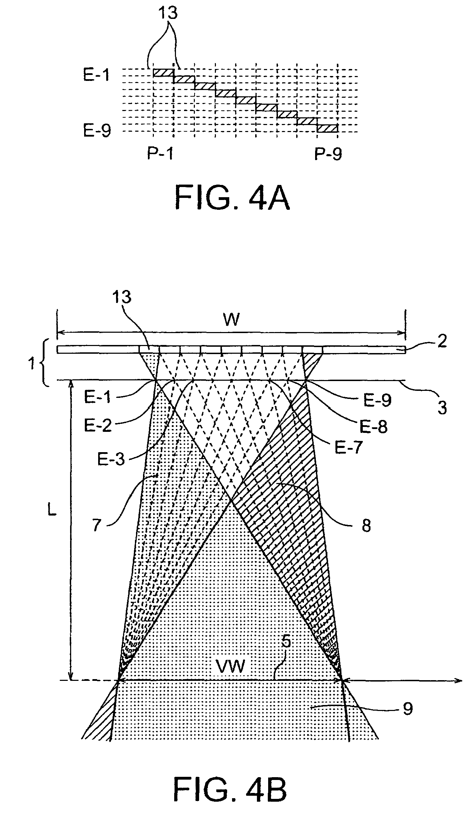

First, a conventional configuration (a horizontal sectional view) of a three-dimensional image display apparatus is shown in Fig. 4B. A three-dimensional image display apparatus 1 shown in Fig. 4B is provided with a two-dimensional image display apparatus 2 constituted of, for example, a liquid crystal panel and an optical plate 3 constituted of a lenticular sheet. A horizontal width of the three-dimensional image display apparatus 1 is represented as W, and a region where a three-dimensional image can be viewed when a viewer directly faces the three-dimensional image display apparatus 1 is represented using a viewing distance L and a viewing zone width VW on a viewing distance plane 5. Regions occupied by light ray groups emitted from exit pupils (lenses) E-1 and E-9 positioned at both ends of the optical plate are denoted by reference numerals 7 and 8. By performing designing such that light ray groups emitted from all exit pupils E-1 to E9 pass through the viewing zone VW on the viewing distance plane 5, the light ray groups emitted from all the exit pupils E-1 to E-9 fill an overlapping region of the light ray groups 7 and 8 (viewing zone: a range 9 surrounded by a thick lines). If a condition is satisfied that a light ray spacing is thicker than an interpupilliary distance, when both eyes of a viewer is positioned in a range of the viewing zone 9, the viewer can view a three-dimensional imaged displayed on a whole face of the three-dimensional image display apparatus 1 correctly. Specifically, when a region which is filled with a group of light rays emitted from an elemental image 13 disposed so as to correspond to each exit pupil is the viewing region 9 and a viewer is present in a region deviated from the region 9, the viewer views a three-dimensional image (called "false image") different from a three-dimensional image to be viewed originally by viewing light ray group passing through exit pupils adjacent to an original exit pupil. Further, when the light ray spacing is thinner than the interpupilliary distance, a stereoscopic image can not be viewed by a viewer. An elemental image is disposed on a pixel group for elemental image displaying.

In Fig. 4A, a relationship between the exit pupils E-1 to E-9 and the elemental images 13 are shown collectively. A vertical direction corresponds to left to right exit pupils from an upper side to a lower side, and a lateral direction corresponds to left to right elemental images 13 from the left to the right side. The region represented with oblique lines shows a correspondence between the exit pupils E-1 to E-9 and the elemental images P-1 to P-9.

When the three-dimensional image display apparatus 1 adopts the multi-view system, the viewing zones shown in Fig. 2 can be realized by making design so as to provide the converging points of light rays on the viewing distance plane 5. Specifically, designing is performed such that intervals of respective exit pupils to be provided are slightly narrower than a (horizontal) width (for example, n $\times$ sub-pixel horizontal width) of a pixel group for elemental image displaying corresponding to each exit pupil. Thereby, a line connecting the center of each pixel group and an exit pupil corresponding thereto crosses at one point on the viewing distance plane 5. That is, a range where an image corresponding to each exit pupil is viewable on the viewing distance plane 5 is maximized so that the ranges 9 (each having the viewing zone width VW) where a three-dimensional image can be viewed is maximized.

On the other hand, in the integral imaging system characterized in that light rays are distributed, a width of a pixel group where an image corresponding to each exit pupil is displayed can not be made constant, which is different from the multiview system, but a (horizontal) width of a pixel group for displaying an elemental image corresponding to each exit pupil is adjusted (for example, producing two values of n $\times$ sub-pixel horizontal width and (n + 1) $\times$ sub-pixel horizontal width) (see JP-A-2004-212666, for example). A line connecting the center of a pixel group where an image corresponding to each exit pupil has been displayed and an exit pupil corresponding thereto can be designed to cross approximately at a point on the viewing distance plane 5. Thereby, like the case of the multiview system, light rays emitted from all the exit pupils are caused to enter on the viewing distance width VW on the viewing zone plane 5 so that maximization is achieved and the viewing zone 9 is realized.

The above is a definition of the viewing zone 9 in the conventional autostereoscopic three-dimensional image display apparatus 1 where one viewing zone is provided, and a viewing zone in a three-dimensional image display apparatus according to one embodiment according to the invention will be explained below.

The two-dimensional image display apparatus 2 may be a liquid crystal display apparatus of a direct view type or a projection type, a plasma display apparatus, a field emission display apparatus, or an organic EL display apparatus, if pixels whose positions are defined within a display plane are arranged in the form of a matrix. As the optical plate 3, a slit member having a structure of exit pupils, each extending in a generally vertical direction, which are disposed cyclically in a generally horizontal direction or a lenticular sheet may be used. A case of using the slit member is illustrated in an embodiment of the invention for simplification. Horizontal sectional views are illustrated in figures, but a parallax in a vertical direction may or may not be provided. That is, the slit member may be understood as a pin-hole array having parallax in a vertical direction.

Next, a case that individual two-dimensional images are displayed on two or more viewing zones in a two-dimensional image display apparatus will be explained. This case accords to the above-described configuration. That is, this case corresponds to a case that a pixel group for elemental image displaying is divided to two or more groups, and same parallax information is displayed on the two or more divided groups, or each of the pixel groups for elemental image displaying divided has a size where it can not be further divided physically (for example, one sub-pixel) and parallax can not be expressed using the pixel group for elemental image displaying divided in the configuration shown in Fig. 2.

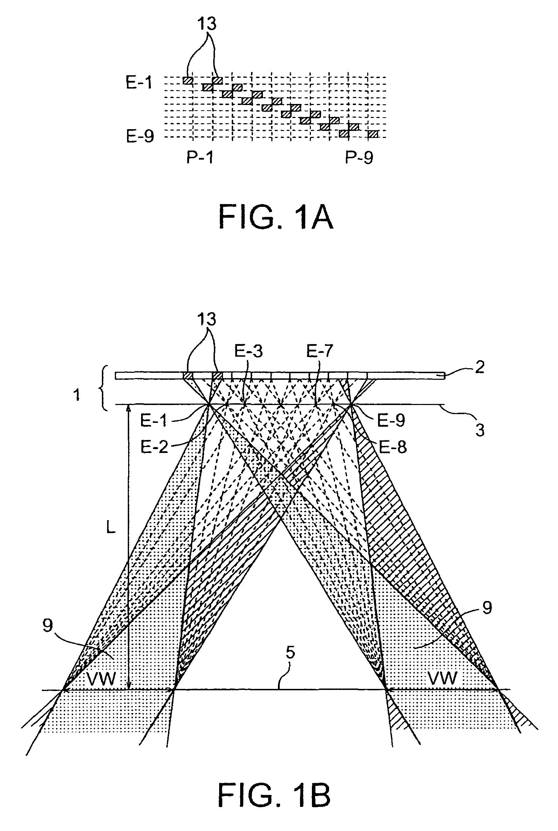

Next, a two-dimensional or three-dimensional image display apparatus where a pixel group for elemental image displaying has been divided to at least two groups according to an embodiment of the invention will be explained with reference to the drawings. A base constitution is shown in Fig. 1B. While such a configuration that the two-dimensional image display apparatus 2 and the exit pupil array 3 are combined with each other is maintained, a pixel group 13 for elemental image displaying corresponding to each of exit pupils E - 1 to E - 9 are provided on two regions, which is different from the conventional one, so that a viewing zone 9 is divided to two zones.

The image display apparatus according to the embodiment is significantly different from the image display apparatus shown in Fig. 2 or Fig. 3 in that the viewing zone 9 has been divided by dividing an elemental image and the divided viewing zones have been also spaced from each other. Two viewing zones 9 spaced from each other shown in Fig. 1B have been realized by changing a displaying position of an elemental image while maintaining the configuration of the three-dimensional display apparatus as it is.

Fig. 1A shows a relationship between the exit pupils E - 1 to E - 9 and the elemental image collectively. Distribution of pixels for elemental image displaying 13 are different from that shown in Fig. 4A.

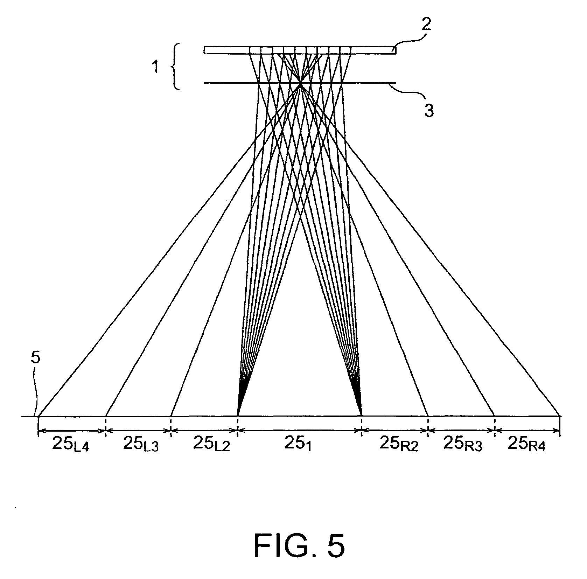

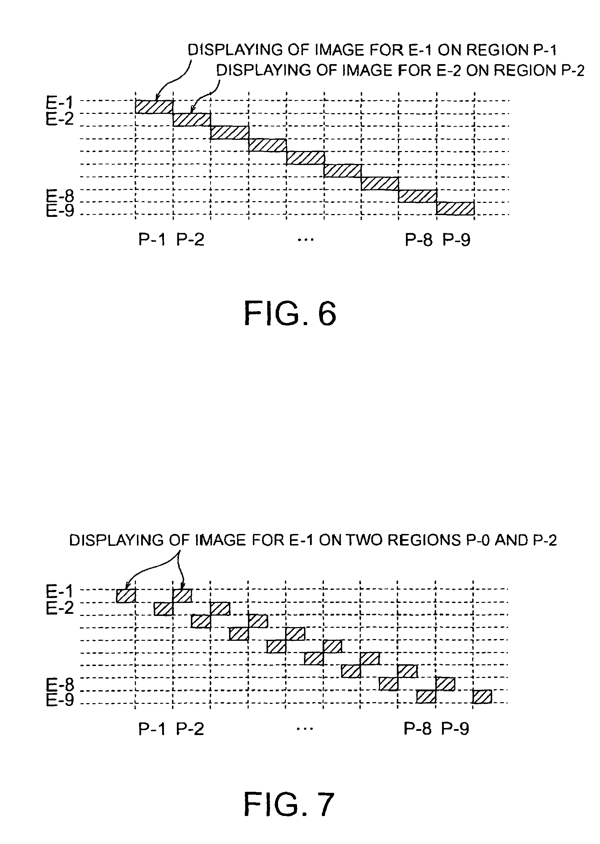

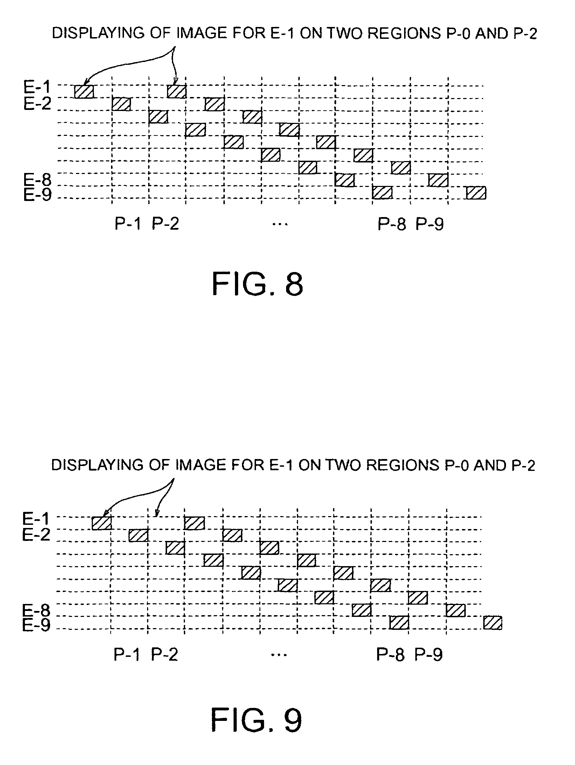

Arrangement of viewing zones and elemental images corresponding thereto which are realizable using a configuration of the embodiment will be explained with reference to Fig. 5 to Fig. 9. When reference numeral $25_1$ indicates a viewing zone width VW where pixels for elementary image displaying are provided to one exit pupil in a group manner, each viewing zone such as $25_{R2}$, $25_{L2}$, $25_{R3}$, $25_{L3}$, $25_{R4}$, $2S_{L4}$ can be realized by only changing pixels for elementary image display and an elemental image displayed thereon in a similar configuration. Fig. 6 is a diagram showing an example of a conventional mapping for pixels for elemental image displaying, while Fig. 7 is a diagram showing an example of mapping for realizing viewing zones $25_{R2}$ and $25_{L2}$ and Fig. 8 is a diagram showing an example of mapping for realizing viewing zone $25_{R3}$ and $25_{L3}$. As shown in Fig. 9, a combination of asymmetrical viewing zones such as a combination of the viewing zones $25_{L4}$ and $2S_{R2}$ can also be realized by making mapping asymmetrical. The viewing zones may be made asymmetrical.

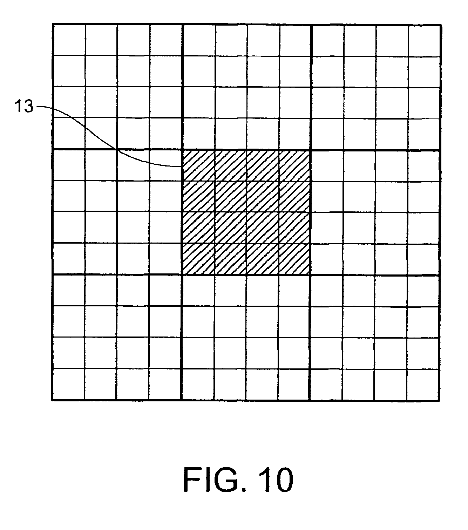

Fig. 10 shows a conventional example of mapping of pixels 13 for elemental image displaying to a two-dimensional image display apparatus when parallax is applied to two directions orthogonal to each other (for example, in a horizontal direction and in a vertical direction). $4 \times 4$ pixels are caused to correspond to one exit pupil and the pixels are positioned in one region collectively.

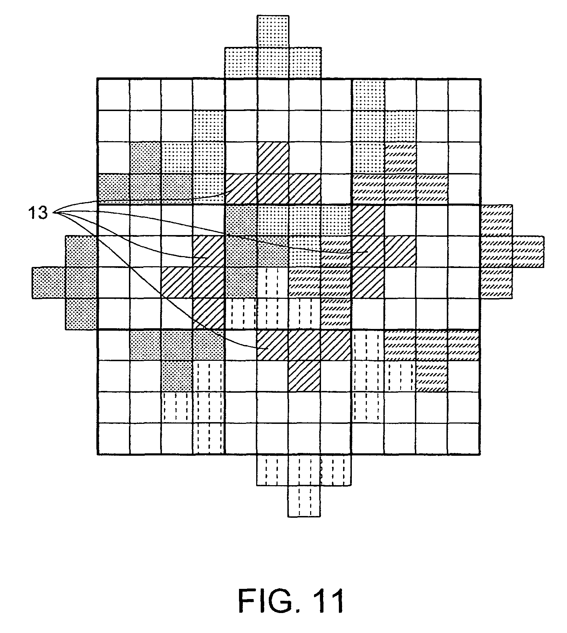

Next, Fig. 11 shows one example of an embodiment where pixels in a pixel group 13 for elemental image displaying have been distributed. The pixels in the pixel group 13 for elemental image displaying have been provided on four areas in a distributing manner. A viewing zone can be divided into two zones in four directions by combining the optical plate with a fly eye lens or a lenticular sheet orthogonal thereto.

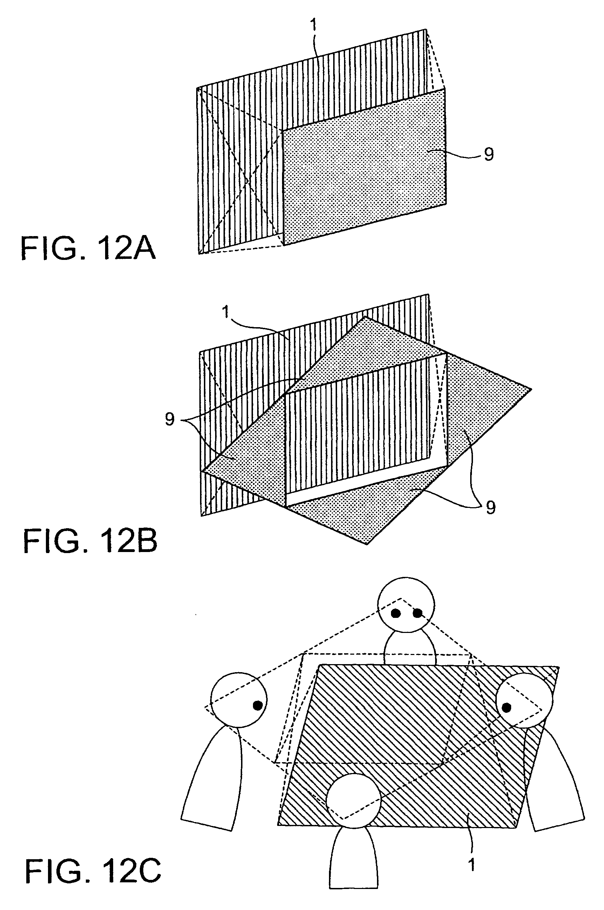

Fig. 12A shows a conceptual diagram of a viewing zone 9 when pixels in a pixel group 13 for elemental image displaying which have come together in one are provided on one exit pupil, as shown in Fig. 8. as shown in Fig. 12B, the viewing zone 9 is divided into four zones by setting the pixel group 13 for elemental image displaying divided into four, as shown in Fig. 9. This means that, assuming that a three-dimensional image display apparatus 1 is placed such that its display is directed upwardly and four persons are present so as to surround four sides of the apparatus 1, viewing zones can be distributed to the respective persons.

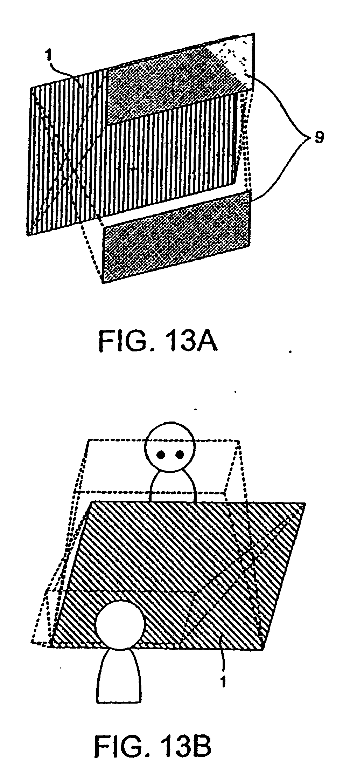

Fig. 13A shows an example where a pixel group 13 for elemental image displaying has been divided into two groups. As shown in Fig. 13A, the viewing zone 9 is divided into two according to the two-division of the pixel group 13. This means that, assuming that a three-dimensional image display apparatus 1 is placed such that its display is directed upwardly and two persons are present at two sides of the apparatus 1 opposed to each other, viewing zones can be distributed to the respective persons.

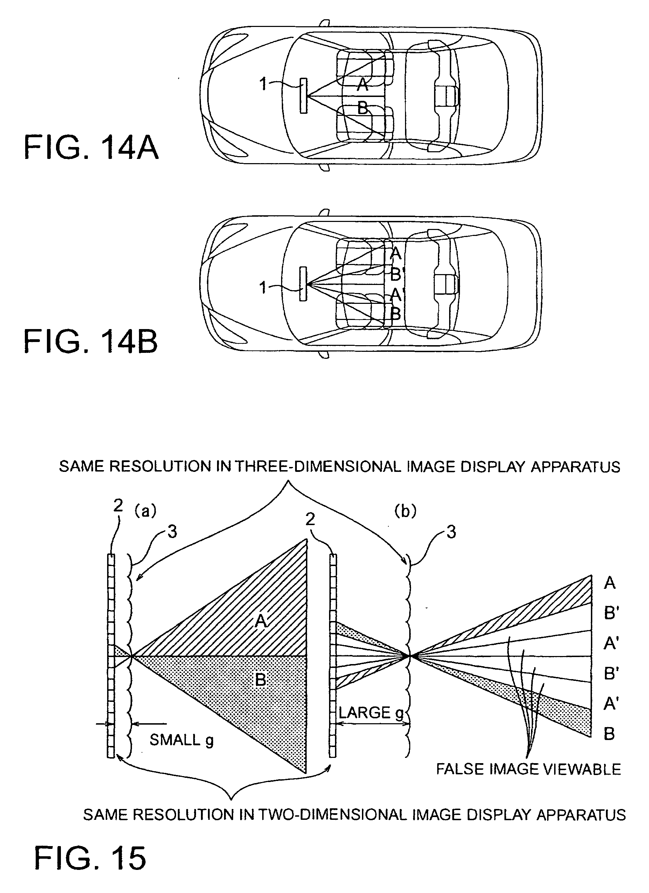

Further, such an advantage that, while maintaining a resolution of a two-dimensional image displaying apparatus to be used and a resolution of a two-dimensional image to be displayed, a gap g can be changed using an approach according to the embodiment will be explained with reference to Figs. 14A and 14B. As a typical example where it is desired to change a gap while the resolutions are being maintained, an advantage will be explained regarding a liquid crystal display used in a car navigation system.

Fig. 14A shows a case that two kinds of viewing zones A and B have been realized by simply dividing an elemental image into two pieces equally. In this case, when it is tried to expand the viewing zones VW of A and B, the gap g is made small, as shown with Equation (1). Though the details will be explained in relation to Comparative Example, when designing is performed such that the gap g accommodates a glass thickness and a lens thickness in 15.4"UXGA, the number of sub-pixels for elemental image displaying becomes 16. Therefore, when a horizontal width of one sub-pixel is 0.0575μm, a horizontal pitch of exit pupils become a little less than 1mm and the number of horizontal pixels for three-dimensional image displaying is 360 (= 1920 × 3/16), which is too coarse as a resolution of a display for a car navigation system.

On the other hand, as shown in Fig. 14B, it is understood that a pixel group for elemental image displaying is divided regarding its position, so that, while the gap g accommodating the glass thickness and the lens thickness is being maintained, the number of sub-pixels for elemental image displaying becomes 8, a horizontal pitch of exit pupils becomes 0.46mm, and the number of pixels for three-dimensional image displaying becomes 720 (= 1920 × 3/8), which results in preservation of a sufficient fineness in the car navigation system.

Figs. 15A and 15B qualitatively show such an advantage that a gap g can be set to be large while maintaining resolutions for the two-dimensional image display apparatus and the three-dimensional image display apparatus, which is achieved by using the viewing zone dividing system according to the embodiment. Additionally, a false image passing through an exit pupil adjacent to an exit pupil through which light rays should originally pass can be viewed between two viewing zones shown in Fig. 15B. Assuming that images A and B should be viewed originally, images A' and B' are false images. In Figs. 15A and 15B, the two-dimensional image display apparatus, pixel groups for this apparatus, and viewing zones filled with groups of light rays which are emitted from pixel groups and pass through exit pupils spaced from the two-dimensional image display apparatus through a gap g are shown. The pixel group is divided into two for displaying an elemental image A or B. The number of pixels obtained by division may be one or plural. Incidentally, respective groups obtained by division include the same number of pixels in Figs. 15A and 15B. When a divided elemental image includes parallax, a three-dimensional image is viewed, but when it does not include parallax (when the number of pixels in the divided elemental image is 1, parallax is not provided), a two-dimensional image is viewed. In Fig. 15A, pixel groups displaying elemental images A and B are positioned adjacent to each other. That is, a pixel group for elemental image displaying corresponding to an exit pupil is provided on two regions continuous to each other. As a result, viewing zones corresponding to A and B are also continuous to each other.

On the other hand, in Fig. 15B, pixel groups displaying elemental images A and B are spaced from each other. That is, pixel groups for elemental image displaying corresponding to an exit pupil are provided on two regions in a separating manner. As a result, viewing zones corresponding to A and B are also separated from each other. Consequently, though a viewer can view an image corresponding to A or B at positions separated approximately equally in Figs. 15A and 15B, the gap g is large in Fig. 15B. It is understood that a horizontal resolution (a horizontal pitch of exit pupils) of an image to be viewed is the same. That is, it is found that, when the gap g can not be set to be small due to the thickness of a glass in a liquid display or the like, it is effective to utilize a method for dividing an elemental image according to this proposal.

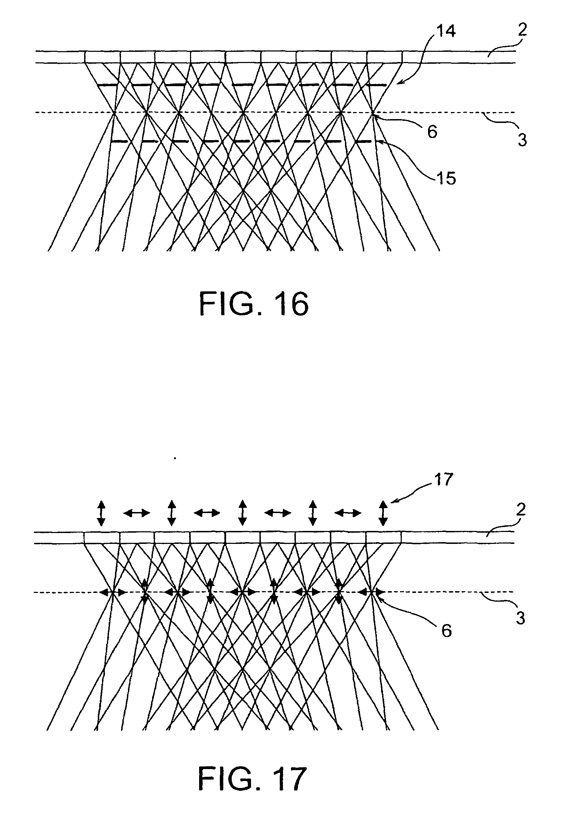

In Fig. 16 and Fig. 17, a structure for preventing the false image from being viewed is shown. Fig. 16 is a diagram showing an example where one of a light shielding plate 14 and a light shielding plate 15 is provided. It is made possible to shield light rays passing through an exit pupil adjacent to an exit pupil 6 through which the light rays should pass originally by providing one of the light shielding plate 14 and the light shielding plate 15. When a reflection film is formed on a back face of a light shielding plate (on a side of the two-dimensional image display apparatus), a brightness of the three-dimensional image display apparatus is slightly improved.

Fig. 17 is a diagram showing an example where light defecting directions 17 are made different for respective adjacent elemental images and for respective adjacent exit pupils 6. With such a configuration, it is made possible to shield light rays passing through an exit pupil adjacent to the exit pupil 6 through which the light rays should pass originally. As a method for making deflecting directions in adjacent regions different from each other, there is a method of using a micro-pole.

Next, Examples of the invention will be explained.

(Example 1)

The two-dimensional image display apparatus 2 shown in Fig. 1B was a liquid crystal display apparatus and it was provided at its front face side with an optical plate 3 and at its back face side with a back light (not shown). Specifically, as the liquid crystal display apparatus, QUXGA - LCD panel [Product Name: CDU - 2106A (for Win) and CDU - 2104A (for Solaris) and the number of pixels was 3200 × 2400, a screen size was 422.4mm × 316.8mm, and the like] was used. A pixel was formed in a square having a size of 132μm × 132μm, a horizontal width of each sub-pixel of red, green, blue was 44μm, and a vertical width thereof was 132μm, the sub-pixel being able to be driven independently. In an ordinary two-dimensional image display apparatus 2, one pixel is constituted of three sub-pixels of red, green and blue arranged laterally. In the Example, however, the two-dimensional image display apparatus 2 was used without applying this constraint to the apparatus. A mosaic arrangement was used as a color filter arrangement.

As the optical plate 3, a lenticular sheet designed such that a pixel position on a liquid crystal panel was set approximately at a focal length was used. That is, it was possible to apply parallax information only in a horizontal direction. A gap (air conversion) g was set to be expressed as the following equation (2) in order to set the conventional viewing zone width VW (the viewing zone width $25_1$ shown in Fig. 5) to 260mm in a viewing distance L of 700mm.

$$g = L \times P/VW \qquad (2)$$
$$= 700 \times (0.044 \times 16)/260$$
$$= 1.90 \text{ (mm)}$$

Specifically, a thickness $g_r$ of a lenticular sheet made from PMMA (polymethylmethacrylate) was expressed by the following equation (3) in subtraction of a gap $g_s$ (= 0.8mm) between the glass and the polarizing plate in the liquid crystal display.

$$g_r = (g - g_s /n_1) \times n_2 \qquad (3)$$

$$= (1.9 - 0.8/1.5) \times 1.5$$
$$= 2.04 \text{ (mm)}$$

In the above equation (3), both a mean refractive index between the glass and the polarizing plate ($n_1$) and a refractive index of PMMA ($n_2$) were set to 1,5 for simplification. A curvature of a lens surface was defined so as to focus slightly inside the color filter portion of the liquid crystal display for the purpose of absorbing deviation of a focal depth due to spherical aberration. A pitch of exit pupils $p_e$ expressed in the following equation (4) was designed to be narrower than 16 times a pitch of sub-pixels (= 0.044mm) by 0.27%, adopting a multiview system design where the horizontal number of sub-pixels for elemental image displaying Nv was 16.

$$p_e = p_p \times Nv \times L/(L + g) \qquad (4)$$
$$= 0.044 \times 16 \times 700/(700 + 1.9)$$
$$= 0.702 \text{ (mm)}$$

Thereby, a converging point of light rays occurred in the viewing distance L, and the viewing zone width VW was maximized.
With the above configuration, pixels for elemental image displaying corresponding to one exit pupil were divided to two groups in two regions and eight pixels adjacent to each side of the viewing zone $25_1$ shown in Fig. 5 were distributed to respective elemental images such that portions corresponding to the viewing zones $25_{L2}$ and $25_{R2}$ shown in Fig. 5 were viewing zones. Thereby, each of two viewing zone widths generated was VW/2 = 130mm which was wider than the interpupilliary distance so that two viewers at viewing distances of 700mm could view individual three-dimensional images in ranges of 130mm centering on points deviated from the front of the display by an angle of 15.6° leftward and rightward in a horizontal direction. A light ray emitting angle (a spacing between light rays carrying parallax emitted) was narrower than that in Comparative Example 1 described below, and a range of depth direction where a three-dimensional image was displayable was ± 5.0cm which was about two times that in Comparative Example 1, when a spatial frequency of the three-dimensional image was 320cpr (calculated from H. Hoshino et al., J. Opt. Soc. Am. A., 15(8), 2059 (1998)).

(Comparative Example 1)

Such a configuration was employed that a two-dimensional image display apparatus was used like Example 1 and two viewers spaced from each other like Example 1 could view a three-dimensional image in a range of the viewing zone $25_1$ shown in Fig. 5. That is, such designing was performed that a range of 520mm (= VW) defined from a viewing zone opposed to the center of the display in left and right directions was set as the viewing zone in the viewing distance (L = 700mm) and different three-dimensional images could be respectively viewed both in a left range of 260mm and in a right range of 260mm obtained by dividing the range of 520mm regarding the left and the right. Therefore, according to the equation (2), the following value could be obtained.

$$g = 700 \times (0.044 \times 16)/520$$
$$= 0.95 \text{ (mm)}$$

When subtraction of the gap gs (= 0.8mm) between the glass and the polarizing plate in the liquid crystal display was conducted, the following thickness $g_r$ of the lenticular sheet made from PMMA was obtained from the equation (3)

$$g_r = (0.9 - 0.8/1.5) \times 1.5$$
$$= 0.62 \text{ (mm)}$$

Both a mean refractive index between a glass and a polarizing plate (n1) and a refractive index of PMMA (n2) were set to 1.5 for simplification. The pitch of exit pupils $p_e$ adopted a multiview system design where the horizontal number of sub-pixels for elemental image displaying Nv was 16. Therefore, the following value of the pitch of exit pupils pe was obtained according to the equation (4).

$$p_e = 0.044 \times 16 \times 700/(700 + 0.9)$$
$$\fallingdotseq 0.703 \text{ (mm)}$$

Thus, the pitch of the exit pupils $p_e$ was designed to be narrower than 16 times (= 0.704mm) a pitch of sub-pixels (= 0.044mm) by 0.14%

With the above configuration, pixels for elemental image displaying corresponding to one exit pupil were divided to two groups in two region and respective elemental images were distributed to 8 pixels $\times$ 2 regions such that a portion corresponding to the viewing zone $25_1$ shown in Fig. 5 was the viewing zone. Thereby, the viewing zone width obtained by dividing the conventional viewing zone $25_1$ into two portions equally was VW/2 = 260mm, so that individual three-dimensional images could be viewed in respective ranges, each being sufficiently larger than the interpupilliary distance.

However, since a light ray emitting angle was larger than that in Example 1, a range of depth direction where a three-dimensional image was displayable was $\pm$ 2.5cm which was about 1/2 that in Example 1, when a spatial frequency of the three-dimensional image was 320cpr (calculated from H. Hoshino et al., J. Opt. Soc. Am. A., 15(8), 2059 (1998)).

(Example 2)

In this Example, the two-dimensional image display apparatus shown in Fig. 1B was a liquid crystal display apparatus and it was provided at its front face side with an optical plate 3 and at its back face side with a back light (not shown). Specifically, as the liquid crystal display apparatus, UXGA - LCD panel [(Product Name: Inspiron 8500) and the number of pixels was 1900 $\times$ 1200, a screen size was 331.2 mm $\times$ 207mm] was used. A pixel was formed in square having a size of 172.5$\mu$m $\times$ 172.5$\mu$m, a horizontal width of each sub-pixel of red, green, blue was 57.5$\mu$m, and a vertical width thereof was 12.5$\mu$m, the sub-pixel being able to be driven independently. In an ordinary two-dimensional image display apparatus 2, one pixel is constituted of three sub-pixels of red, green and blue arranged laterally. In the Example, however, the two-dimensional image display apparatus 2 was used without applying this constraint to the apparatus. A mosaic arrangement was used as a color filter arrangement.

As the optical plate 3, a lenticular sheet designed such that a pixel position on a liquid crystal panel was positioned approximately at a local length was used. That is, it was possible to apply parallax information only in a horizontal direction. The gap g was set to have the following value according to the equation (2) in order to set the conventional viewing zone width VW (the viewing zone width $25_1$ shown in Fig. 5) to 260mm in a viewing distance L of 875mm.

$$g = 875 \times (0.0575 \times 9)/600$$
$$= 0.75 \text{ (mm)}$$

Specifically, as a thickness gr of a lenticular sheet made from PMMA, the following value was set from the equation (3) by subtraction of a gap $g_s$ (= 0.7mm) between a glass and a polarizing plate in a liquid crystal display.

$$g_r = (0.75 - 0.7/1.5) \times 1.5$$
$$= 0.43 \ (mm)$$

Both a mean refractive index from a glass to a polarizing plate ($n_1$) and a refractive index of PMMA ($n_2$) were set to 1.5 for simplification. A curvature of a lens surface was defined so as to focus slightly inside the color filter portion of the liquid crystal display for the purpose of absorbing deviation of a focal depth due to spherical aberration. For the pitch of exit pupils $p_e$, a multiview system design where the horizontal number of sub-pixels for elemental image displaying Nv was 16 was adopted, where the following value was obtained as $p_e$ according to the equation (4).

$$p_e = 0.0575 \times 9 \times 875/(875 + 0.75)$$
$$= 0.517 \ (mm)$$

Thus, the pitch of exit pupils $p_e$ was designed to be narrower than 9 times (= 0.5175mm) a pitch of sub-pixels (= 0.0575mm) by 0.08%. Thereby, a converging point of light rays occurred in the viewing distance L and the viewing zone width VW was maximized.

With the above configuration, pixels for elemental image displaying corresponding to one exit pupil were divided to two groups in two regions and eight pixels adjacent to each side of the conventional elemental image were distributed to respective elemental images such that portions corresponding to the viewing zones $25_{L2}$ and $25_{R2}$ shown in Fig. 5 were viewing zones. Thereby, each of two viewing zone widths was VW/2 = 300 mm, which was sufficiently larger than the interpupilliary distance. Therefore, when the display was used as a car navigation system, each of two viewers seating on a driver's seat and seating on a front passenger's seat could view corresponding one of three-dimensional images within a range of 300mm in a horizontal direction in a viewing distance of 875mm (in corresponding one of directions of 23.1° from the front of the display leftward and rightward). However, a light ray density was lower than that in Comparative Example 2 described below, and a range of depth direction where a three-dimensional image was displayable was ± 2.0cm, when a spatial frequency of the three-dimensional image was 320cpr (calculated from H. Hoshino et al., A. Opt. Soc. Am. A., 15(8), 2059 (1998)). Further, since a resolution of a three-dimensional image in a horizontal direction was 640 pixels, a sufficient resolution which allowed displaying of a two-dimensional image as it was could be secured. Accordingly, a sufficient performance required as a display for a car navigation system could be achieved.

(Comparative Example 2)

Such a configuration was employed that a two-dimensional image display apparatus was used like Example 2 and two viewers spaced from each other like Example 1 could view a three-dimensional image in a range of the viewing zone $25_1$ shown in Fig. 5. That is, such designing was performed that a range of 1200mm (= VW) defined by points positioned on both left and right sides from the front of the display was defined as the viewing zone in the viewing distance (L = 875mm) and two viewers on a driver's seat and on a front passenger's seat were within the viewing zone so that they could view different three-dimensional images in respective ranges of 600mm obtained by dividing the viewing zone to two zones equally. Considering the gap (= 0.7mm) between the glass and the polarizing plate in the liquid crystal display, the horizontal number of pixels for elemental image displaying (the number of parallaxes in a horizontal direction) was defined in order to secure a thickness of 0.3mm or more for a lenticular sheet made from PMMA. Both a mean refractive index between the glass and the polarizing plate ($n_1$) and a refractive index of PMMA ($n_2$) were set to 1.5 for simplification. A value of the gap g was obtained from the following equation (5).

$$g = g_r/n_2 + g_s/n_1 \qquad\qquad (5)$$
$$= (0.3 + 0.7)/1.5$$
$$= 0.67 \ (mm)$$

The number of parallaxes in a horizontal direction $N_v$ could be obtained from a width P of the pixel group for elemental image display 13 using the following equations (6) and (7).

$$P = g \times VW/L \qquad\qquad (6)$$
$$= 0.67 \times 1200/875$$
$$= 0.919 \text{ (mm)}$$

$$N_v = P/p_p \qquad\qquad (7)$$
$$= 0.919/0.0575$$
$$\approx 16 \text{ (sub-pixels)}$$

That is, by setting the horizontal number of sub-pixels for elemental image displaying to 16, two viewers on the driver's seat and the front passenger's seat could be positioned within the viewing zones while a lens thickness of 0.3mm or more was being maintained.

As a result, since the light ray density was improved as compared with Example 2, a range of a depth direction where a three-dimensional image could be displayed when a spatial frequency for the three-dimensional image was set to 320cpr was $\pm$ 2.0cm which was equal to that in Example 2 (calculated from H. Hoshino et al., J. Opt. Soc. Am. A., 15(8), 2059 (1998)). However, the resolution of the three-dimensional image in the horizontal direction was very low such as 360 pixels, which was not suitable for content display for car navigation.

(Example 3)

A two-dimensional image display apparatus was disposed such that a display thereof was directed upwardly like Example 2 and a viewing zone division in a vertical direction was performed such that two viewers positioned so as to be opposed to each other on both long sides of the display were included in the divided viewing zones (see Fig. 11).

Designing was conducted such that the viewing zone width VW of the viewing zone $25_1$ shown in Fig. 5 was 370mm such that each of the viewers could view corresponding one of images within a range of 185mm centering on a direction of 30.7° from the front of the display in a vertical direction in the viewing length L (= 350mm) assuming two viewers opposed to each other via a display with a display face directed upwardly. At that time, considering the gap (= 0.7mm) between the glass and the polarizing plate in the liquid crystal display, the vertical number of pixels for elemental image displaying (the number of parallaxes in a vertical direction) was defined in order to secure a thickness of 0.3mm or more for a lenticular sheet made from PMMA. Both a mean refractive index between the glass and the polarizing plate ($n_1$) and a refractive index of PMMA ($n_2$) were set to 1.5 for simplification, and the number of parallaxes in a vertical direction was obtained according to the equations (5) and (6) in the following manner.

$$N_v = (0.3 + 0.7)/1.5 \times 370/350/0.1725$$
$$\approx 4 \text{ (pixels)}$$

That is, by setting the vertical number of pixels for elemental image displaying to 4, two viewers opposed to each other via a display directed upwardly could be positioned within the viewing zone width, while securing a lens thickness of 0.3mm or more. Particularly, the vertical pitch of exit pupils pe where multiview system design was adopted for the vertical direction and a non-lens direction viewed from the viewers was positioned in the horizontal direction was obtained according to the equation (4) as follows:

$$p_e = 0.1725 \times 4 \times 350/(350 + 0.67)$$
$$= 0.689 \text{ (mm)}$$

As a result, the two viewers positioned on both sides of the three-dimensional image display apparatus whose display was directed upwardly could view individual images, respectively.

The images viewed by the two viewers become a three-dimensional image when it is applied with parallax and they become a two-dimensional image when it is not applied with parallax. For the three-dimensional image, when parallax is applied to both horizontal and vertical directions, a lens array can be used. This configuration can be realized more inexpensively by utilizing a lens for the horizontal direction and utilizing a slit for the vertical direction.

(Example 4)

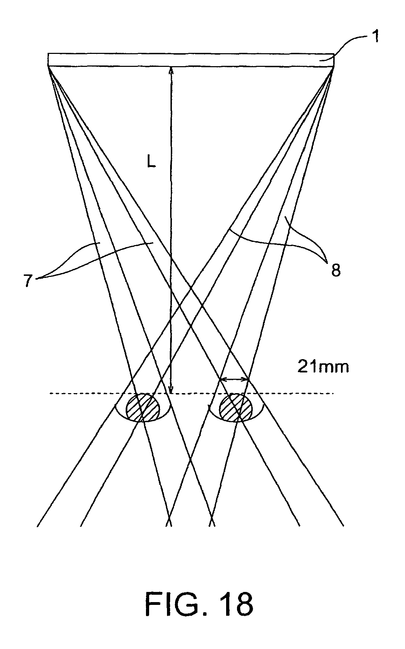

Such a configuration was employed that a two-dimensional image display apparatus was used like Example 1 and one viewer could view an image in the ranges of the viewing zones $25_{L2}$ and $25_{R2}$ shown in Fig. 5 with his/her both eyes. That is, designing was performed such that the viewing zone width VW of the viewing zone $25_1$ shown in Fig. 5 was 42mm such that one viewer could view a three-dimensional image within a range of 21mm centering on directions of 2.58° from the front of the display in a horizontal direction leftward and rightward in the viewing distance L (= 700mm) (see Fig. 18). That is, the center of the viewing zone coincided with the interpupilliary distance (63mm). At that time, the gap g was obtained in the following manner.

$$g = 700 \times (0.044 \times 16)/42$$
$$= 11.7 \ (mm)$$

Specifically, as a thickness $g_r$ of a lenticular sheet made from PMMA, the following value was set from the equation (3) by subtraction of a gap $g_s$ (= 0.8mm) between a glass and a polarizing plate in the liquid crystal display.

$$g_r = (11.7 - 0.8/1.5) \times 1.5$$
$$= 16.8 \ (mm)$$

Both a mean refractive index between a glass and a polarizing plate ($n_1$) and a refractive index of PMMA ($n_2$) were set to 1.5 for simplification. Since a spherical aberration could be suppressed owing to such a lens thickness as 16.8mm, a three-dimensional image viewable in this system was very clear. Further, since the light ray density was very high, a range of a depth direction where a three-dimensional image was displayable when a spatial frequency for a three-dimensional image was 320cpr was considerably increased so as to be defined by a near direction length of 20cm and a depth direction length of 50cm (calculated from H. Hoshino et al., J. Opt. Soc. Am. A., 15(8), 2059 (1998)).

On the other hand, since the viewable range was limited to a very small range of 21mm defined between the left and right sides, it was necessary to use combination with a head tracking based upon an optical approach or provide a viewing window for fixing a viewing position.

As the three-dimensional image display system according to the example, an integral imaging system or another multiview system may be adopted. When the integral imaging system is adopted, it is necessary to mainly generate pixel groups for elemental image displaying constituted of 16 pixels as the horizontal number of pixels and discretely generate pixel groups for elemental image displaying constituted of 17 pixels as the horizontal number of pixels in the definition for the viewing zone $25_1$ in Fig. 5 in order to maximize the viewing zone width VW in the viewing distance L (see JP-A-2004-212666). The frequency (a ratio of one elemental image constituted of 17 pixels to n elemental images constituted of 16 pixels) is determined according to the following equation.

$$p_e : P = L : (L + g) \qquad (8)$$
$$= 700 : 711.7$$

Further, the following is obtained.

$$((n - 1) \times 16 + 17)/(16 \times n)$$

$$= p/p_e$$
$$= (L + g)/L$$
$$= 711.7/700$$

Accordingly, n = 3.7 is obtained.

By generating elemental images constituted of 17 pixels discretely while keeping the $p_e$ in $p_p \times 16$ (= 0.704 (mm)), $p > p_e$ is obtained, so that the viewing zone width at the viewing distance L is maximized. On the other hand, when the multiview system is adopted, all Ps become $p_p \times 16$ (= 0.704(mm)), and the horizontal pitch $p_e$ in the optical plate is obtained according to the equation (4).

$$p_e = 0.692 \text{ (mm)}$$

Thus, by designing pe to be smaller than the elemental image width p by 1.65%, $p > p_e$ is obtained so that the viewing zone width in the viewing distance L is maximized.

(Example 5)

In a configuration similar to that in Example 4, a two-dimensional image acquired from a right eye position was displayed on a pixel group for elemental image displaying of two pixel groups for elemental image displaying divided to correspond to the viewing zones $25_{L2}$ and $25_{R2}$ shown in Fig. 5, which was positioned on the left side to the exit pupil regarding the viewer, a two-dimensional image acquired from a left eye position was displayed on a pixel group for elemental image displaying of the two pixel groups which was positioned on the right side, and the same parallax information was displayed on all the pixel groups divided to 8 (or 9) in a horizontal direction. Thereby, a stereoscopic view utilizing contents for binocular system could be made possible.

As explained above, the image display apparatus according to the embodiment of the invention is provided with the two-dimensional image display apparatus where a plurality of pixels are arranged in a two-dimensional manner and the optical plate which has a plurality of exit pupils and makes different regions where image information pieces displayed on the pixels are viewed for the respective pixels by controlling light ray directions from the pixels, where a pixel group for elemental image displaying constituted of a plurality of pixels corresponds to one exit pupil of the exit pupils, image information corresponding to a position where each pixel is viewed via the exit pupil is displayed is displayed on each pixel for elemental image displaying, and the pixel group for elemental image displaying is provided so as to be separated to two or more regions.

When the number of pixels constituted of at least one of the two or more regions of the pixel group for elemental image displaying separated is represented as N (N: a natural number), parallax can be not applied to image information displayed on the N pixels, so that on two or more viewing zones separated due to separation of the pixel group for elemental image displaying into two or more pixel groups for elemental images, individual two-dimensional images corresponding to image information displayed on the two or more pixel groups for elemental image displaying can appear.

When the number of pixels constituted of at least one of the two or more regions of the pixel group for elemental image displaying separated is represented as M (M: a natural number of 2 or more), parallax can be applied on to image information displayed on the M pixels so that two or more viewing zones separated due to separation of the pixel group for elemental image displaying into two or more pixel groups for elemental images, individual three-dimensional images corresponding to image information displayed on the two or more pixel groups for elemental image displaying appear.

When the number of pixels constituted of each of the two or more regions of the pixel group for elemental image displaying separated is represented as N (N: a natural number), parallax can be not applied to image information displayed on the N pixels, so that, on two or more viewing zones separated due to separation of the pixel group for elemental image displaying into two or more pixel groups for elemental images, individual two-dimensional images corresponding to image information elements displayed on the two or more pixel groups for elemental image displaying appear.

When the number of pixels constituted of one of the two or more regions of the pixel group for elemental image displaying separated is represented as M (M: a natural number of 2 or more), parallax can be applied to image information displayed on the M pixels, so that, on two or more viewing zones separated due to separation of the pixel group for elemental image displaying into two or more pixel groups for elemental images, individual three-dimensional images corresponding to image information elements displayed on the respective two or more pixel groups for elemental image displaying appear.

When the number of pixels constituted of each of the two or more regions of the pixel group for elemental image displaying separated is represented as M (M: a natural number of 2 or more),

parallax can not applied to image information displayed on M pixels regarding one of the two or more pixel groups for image information displaying and

parallax can be applied to image information displayed on M pixels regarding another of the two or more pixel groups for image information displaying, so that

on two or more viewing zones separated due to separation of the pixel group for elemental image displaying into two or more pixel groups for elemental images, individual two-dimensional images corresponding to image information elements displayed on the two or more pixel groups for elemental images appear.

Two viewing zones can be arranged to positions of two eyes of a viewer.

A position of the viewer can be detected and a position of an elemental image is moved so as to correspond to the positions of both eyes of the viewer moving on two regions, so that a substantial viewing zone is expanded.

Two or more viewing zones can be arranged to positions of two or more viewers.

The image display apparatus can be arranged such that a display plane thereof is horizontal, and the pixel group for elemental image displaying is mapped such that the positions of two or more viewers opposed to each other via the image display apparatus are in the two or more viewing zones.

A multiview system can be adopted as a displaying system, and when n is a natural number, the horizontal or vertical number of pixels in the pixel group for elemental image displaying corresponding to one of the exit pupils satisfies M = n.

An integral imaging system can be adopted as a displaying system, and when n is a natural number, the horizontal or vertical number of pixels in the pixel group for elemental image displaying corresponding to one of the exit pupils satisfies M = n or M = (n + 1).

Parallax information can be applied to a viewer only in a horizontal direction in order to realize a three-dimensional view, and when m is a natural number, the horizontal or vertical number of pixels in the pixel group for elemental image displaying corresponding to one of the exit pupils satisfies M = m in order to distribute viewing zones to two viewers opposed to each other via the image display apparatus is arranged such that a display plane thereof is horizontal or apply parallax in a vertical direction.

Incidentally, the numbers of constituent pixels of two or more divided pixel groups for elemental image displaying or areas of viewing zones are asymmetrical.

As explained above, according to the embodiment of the invention, since viewing zones spaced from each other are provided in a two-dimensional or three-dimensional image display apparatus, individual two-dimensional or three-dimensional images can be displayed on the respective viewing zones and waste light rays can be prevented from being generated between the viewing zones, which allows effective utilization of all pixel information elements.

Additional advantages and modifications will readily occur to those skilled in the art. Therefore, the invention in its broader aspects is not limited to the specific details and representative embodiments shown and described herein. Accordingly, various modifications may be made without departing from the scope of the inventive as defined by the appended claims.

**Claims**

1. An image display apparatus comprising:

   a two-dimensional image display apparatus where a plurality of pixels are arranged in a two-dimensional manner; and
   an optical plate which has a plurality of exit pupils and makes different regions where image information pieces displayed on the pixels are viewed for the respective pixels by controlling light ray directions from the pixels, wherein
   a pixel group for elemental image being a plurality of pixels corresponds to one exit pupil of the exit pupils,
   the image information corresponding to a position where each pixel is viewed via the exit pupil is displayed is displayed on each pixel for elemental image displaying, and
   the pixel group for elemental image displaying is provided so as to be separated to two or more regions.

2. An image display apparatus according to claim 1, wherein, when the number of pixels being at least one of the two or more regions of the pixel group for elemental image separated is represented as N (N: a natural number), parallax is not applied to image information displayed on the N pixels, so that on two or more viewing zones separated due to separation of the pixel group for elemental image displaying into two or more pixel groups for elemental images, individual two-dimensional images corresponding to image information displayed on the two or more pixel groups for elemental image displaying appear.

3. An image display apparatus according to claim 1, wherein, when the number of pixels being at least one of the two or more regions of the pixel group for elemental image separated is represented as M (M: a natural number of 2 or more), parallax is applied on to image information displayed on the M pixels so that two or more viewing zones separated due to separation of the pixel group for elemental image displaying into two or more pixel groups for elemental images, individual three-dimensional images corresponding to image information displayed on the two or more pixel groups for elemental image displaying appear.

4. An image display apparatus according to claim 1, wherein, when the number of pixels being each of the two or more regions of the pixel group for elemental image separated is represented as N (N: a natural number), parallax is not applied to image information displayed on the N pixels, so that, on two or more viewing zones separated due to separation of the pixel group for elemental image displaying into two or more pixel groups for elemental images, individual two-dimensional images corresponding to image information elements displayed on the two or more pixel groups for elemental image displaying appear.

5. An image display apparatus according to claim 1, wherein, when the number of pixels being one of the two or more regions of the pixel group for elemental image separated is represented as M (M: a natural number of 2 or more), parallax is applied to image information displayed on the M pixels, so that, on two or more viewing zones separated due to separation of the pixel group for elemental image displaying into two or more pixel groups for elemental images, individual three-dimensional images corresponding to image information elements displayed on the respective two or more pixel groups for elemental image displaying appear.

6. An image display apparatus according to claim 1, wherein, when the number of pixels being each of the two or more regions of the pixel group for elemental image separated is represented as M (M: a natural number of 2 or more),

   parallax is not applied to image information displayed on M pixels regarding one of the two or more pixel groups for image information displaying and
   parallax is applied to image information displayed on M pixels regarding another of the two or more pixel groups for image information displaying, so that
   on two or more viewing zones separated due to separation of the pixel group for elemental image displaying into two or more pixel groups for elemental images, individual two-dimensional images corresponding to image information elements displayed on the two or more pixel groups for elemental images appear.

7. An image display apparatus according to any one of claims 2 to 5, wherein two viewing zones are arranged to positions of two eyes of a viewer.

8. An image display apparatus according to claim 7, wherein a position of the viewer is detected and a position of an elemental image is moved so as to correspond to the positions of both eyes of the viewer moving on two regions, so that a substantial viewing zone is expanded.

9. An image display apparatus according to any one of claims 2 to 6, wherein two or more viewing zones are arranged to positions of two or more viewers.

10. An image display apparatus according to claim 9, wherein the image display apparatus is arranged such that a display plane thereof is horizontal, and the pixel group for elemental image displaying is mapped such that the positions of two or more viewers opposed to each other via the image display apparatus are in the two or more viewing zones.

11. An image display apparatus according to claim 5 or 6, wherein a multiview system is adopted as a displaying system, and when n is a natural number, the horizontal or vertical number of pixels in the pixel group for elemental image displaying corresponding to one of the exit pupils satisfies $M = n$.

12. An image display apparatus according to claim 5 or 6, wherein an integral imaging system is adopted as a displaying system, and when n is a natural number, the horizontal or vertical number of pixels in the pixel group for elemental image displaying corresponding to one of the exit pupils satisfies $M = n$ or $M = (n + 1)$.

13. An image display apparatus according to claim 11 or 12, wherein parallax information is applied to a viewer only in a horizontal direction in order to realize a three-dimensional view, and when m is a natural number, the horizontal or vertical number of pixels in the pixel group for elemental image displaying corresponding to one of the exit pupils satisfies $M = m$ in order to distribute viewing zones to two viewers opposed to each other via the image display apparatus is arranged such that a display plane thereof is horizontal or apply parallax in a vertical direction.

13

E-1

E-9

P-1                    P-9

# FIG. 1A

13

E-3      E-7

2

1

E-1

E-2

E-9

3

E-8

L

9

9

9

5

VW              VW

# FIG. 1B

FIG. 2

FIG. 3

FIG. 4A

FIG. 4B

**FIG. 5**

DISPLAYING OF IMAGE FOR E-1 ON REGION P-1
DISPLAYING OF IMAGE FOR E-2 ON REGION P-2

E-1
E-2

E-8
E-9

P-1 P-2          ···          P-8 P-9

# FIG. 6

DISPLAYING OF IMAGE FOR E-1 ON TWO REGIONS P-0 AND P-2

E-1
E-2

E-8
E-9

P-1 P-2          ···          P-8 P-9

# FIG. 7

DISPLAYING OF IMAGE FOR E-1 ON TWO REGIONS P-0 AND P-2

E-1
E-2

E-8
E-9

P-1 P-2      ···      P-8 P-9

## FIG. 8

DISPLAYING OF IMAGE FOR E-1 ON TWO REGIONS P-0 AND P-2

E-1
E-2

E-8
E-9

P-1 P-2      ···      P-8 P-9

## FIG. 9

13 —

FIG. 10

FIG. 11

**FIG. 12A**

**FIG. 12B**

**FIG. 12C**

FIG. 13A

FIG. 13B

FIG. 14A

FIG. 14B

SAME RESOLUTION IN THREE-DIMENSIONAL IMAGE DISPLAY APPARATUS

2 (a)                                    (b)
    3                    2                    3

                                                              A
                                                              B'
                                                              A'
              A                                               B'
              B                                               A'
                         LARGE g                              B

SMALL g                              FALSE IMAGE VIEWABLE

SAME RESOLUTION IN TWO-DIMENSIONAL IMAGE DISPLAY APPARATUS

FIG. 15

FIG. 16

FIG. 17

FIG. 18

**European Patent**
**Office**

## EUROPEAN SEARCH REPORT

Application Number

EP 05 25 5928

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 015, no. 179 (E-1064), 8 May 1991 (1991-05-08) -& JP 03 040692 A (NIPPON TELEGR & TELEPH CORP <NTT>), 21 February 1991 (1991-02-21) * the whole document * | 1-13 | G02B27/22 H04N13/00 |
| X | US 5 528 420 A (MOMOCHI ET AL) 18 June 1996 (1996-06-18) * the whole document * | 1-13 | |
| X | EP 1 251 394 A (THOMSON LICENSING S.A) 23 October 2002 (2002-10-23) * the whole document * | 1-13 | |
| X | US 2003/206343 A1 (MORISHIMA HIDEKI ET AL) 6 November 2003 (2003-11-06) * the whole document * | 1-13 | |
| X | BERKEL VAN C ET AL: "CHARACTERISATION AND OPTIMISATION OF 3D-LCD MODULE DESIGN" PROCEEDINGS OF THE SPIE, SPIE, BELLINGHAM, VA, US, vol. 3012, 11 February 1997 (1997-02-11), pages 179-186, XP009000176 ISSN: 0277-786X * the whole document * | 1-13 | **TECHNICAL FIELDS SEARCHED (IPC)** G02B H04N |
| X | ISONO H ET AL: "AUTOSTEREOSCOPIC 3-D TELEVISION" ELECTRONICS & COMMUNICATIONS IN JAPAN, PART II - ELECTRONICS, WILEY, HOBOKEN, NJ, US, vol. 76, no. 8, 1 August 1993 (1993-08-01), pages 89-97, XP000442299 ISSN: 8756-663X * the whole document * | 1-13 | |

-/--

The present search report has been drawn up for all claims

| Place of search | Date of completion of the search | Examiner |
|---|---|---|
| Munich | 23 November 2005 | Daffner, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**European Patent Office**

**EUROPEAN SEARCH REPORT**

Application Number

EP 05 25 5928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/057807 A1 (TAKAGI AYAKO ET AL) 17 March 2005 (2005-03-17) * the whole document * ----- | 1-13 | |
| | | | TECHNICAL FIELDS SEARCHED (IPC) |

The present search report has been drawn up for all claims

| Place of search | Date of completion of the search | Examiner |
|---|---|---|
| Munich | 23 November 2005 | Daffner, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 05 25 5928

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2005

| Patent document cited in search report | | Publication date | Patent family member(s) | | Publication date |
|---|---|---|---|---|---|
| JP 03040692 | A | 21-02-1991 | NONE | | |
| US 5528420 | A | 18-06-1996 | JP | 3409810 B2 | 26-05-2003 |
| | | | JP | 7077668 A | 20-03-1995 |
| EP 1251394 | A | 23-10-2002 | US | 2002176163 A1 | 28-11-2002 |
| US 2003206343 | A1 | 06-11-2003 | JP | 2004007566 A | 08-01-2004 |
| US 2005057807 | A1 | 17-03-2005 | CN | 1598644 A | 23-03-2005 |
| | | | JP | 2005091623 A | 07-04-2005 |

EPO FORM P0459

For more details about this annex : see Official Journal of the European Patent Office, No. 12/82

**EP 1 708 010 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004212666 A

- JP 2000275576 A

**Non-patent literature cited in the description**

- **H. HOSHINO et al.** *J. Opt. Soc. Am. A.,* 1998, vol. 15 (8), 2059

- **H. HOSHINO et al.** *A. Opt. Soc. Am. A.,* 1998, vol. 15 (8), 2059